# EUROPÄISCHE PATENTANMELDUNG

(11) **EP 2 228 874 A1**
(43) Veröffentlichungstag der Anmeldung: **15.09.2010**
(21) Anmeldenummer: 10150432.2
(22) Anmeldetag: 11.01.2010
(51) Int. Cl.: H01R 39/26, H01R 39/38, H02K 5/14

(54) **Bürstenlagereinrichtung und Elektromaschine mit einer Bürstenlagereinrichtung**

(30) Priorität: 10.03.2009 DE 102009001418
(71) Anmelder: Robert Bosch GmbH, 70442 Stuttgart (DE)
(72) Erfinder: Drewe, Ingo, 77815, Buehl (DE)

(57) **Zusammenfassung**

Eine Bürstenlagereinrichtung (25) weist wenigstens zwei mit einem Kommutator (23) an einem Anker (12) zusammenwirkende Bürstenelemente (32) auf, die jeweils an einem Federelement (31) angeordnet sind, das das Bürstenelement (32) unter Vorspannung gegen den Kommutator (23) drückt. Erfindungsgemäß ist vorgesehen, dass die Federelemente (31) an einem Bürstenträger (24; 24a) angeordnet sind, der auf einer Welle (15; 15a) gelagert ist, die auch der Lagerung des Ankers (12) dient. Die erfindungsgemäße Bürstenlagereinrichtung (25) ermöglicht eine weniger toleranzbehaftete Ausrichtung der Bürstenelemente (32) zum Kommutator (23) und verringert somit Leistungsverluste.

## Beschreibung

### Stand der Technik

Die Erfindung betrifft eine Bürstenlagereinrichtung gemäß dem Oberbegriff des Anspruchs 1 und eine Elektromaschine mit einer Bürstenlagereinrichtung.

Elektromotoren zum Antrieb mechanischer Komponenten sind in vielfältigster Bauart bekannt. Hierbei besitzen Universalmaschinen sowie permanent oder elektrisch erregte Gleichstrommaschinen üblicherweise ein Kohle-Kommutatorsystem, das zur Stromumschaltung genutzt wird. Bei jedem Umschalten, d.h. bei jedem Wechsel des Kohlekontaktes auf dem Kommutator schwankt auch das Stromsignal. Dieser Effekt wird beim sogenannten "Ripple-Counting" ausgenutzt. Es werden die Anzahl der Strom-Ripples gezählt. Verknüpft man die Anzahl der Strom-Ripples mit dem Wissen über die Bauform der Maschine (Nutigkeit, Polzahl) kann damit sowohl die Drehzahl als auch die Relativposition des Motorankers berechnet werden. Dieses Verfahren wird als SLC-Verfahren (Sensorless Control) bezeichnet.

Bei einer zweipoligen Maschine sind typischerweise Nord- und Südpol der Magnete in einem Winkel von 180° zueinander versetzt angeordnet, bei einer vierpoligen Maschine um 90° usw.. Damit sind auch die Winkellagen der Kohlebürsten zueinander bestimmt. Auch hier gilt analog zur Magnetanordnung der Wert von 180° bei einer zweipoligen Maschine bzw. von 90° bei einer vierpoligen Maschine usw.

Typischerweise werden bei einer permanenterregten Maschine die Magnete zum Poltopf ausgerichtet. Falls ein Getriebegehäuse vorhanden ist, wird dies üblicherweise ebenfalls zum Poltopf ausgerichtet. Bei einer aus der DE 20 2006 003 747 U1 bekannten Bürstenlagereinrichtung nach dem Oberbegriff des Anspruchs 1 wird der Bürstenträger über eine mit ihm verbundene Platine zum Polrohr ausgerichtet, wobei die Platine über Fortsätze in korrespondierende Ausnehmungen des Polrohrs eingreift. Es sind jedoch auch Lösungen bekannt, bei denen der Bürstenträger am Getriebegehäuse ausgerichtet wird. Wird nun eine Toleranzrechnung durchgeführt mit dem Ziel, die Berührpunkte und -flächen der Kohlen auf dem Kommutator zu bestimmen und wird dabei der Winkel zwischen den Berührpunkten bestimmt, so kann es aufgrund der Einzeltoleranzen der Bauteile in der Summe zu großen Abweichungen zur Soll-Lage kommen. So ist beispielsweise bei einem bekannten, industriell hergestellten zweipoligen Antrieb festgestellt worden, dass anstatt einer Soll-Lage von 180° die Bürstenkontakte in einem Winkel von 168° zueinanderstehen. Diese Abweichung führt beim Betrieb zu Leistungsverlusten aufgrund der Vor- und Nachkommutierung. Dabei wird im zeitlichen Sinn einer Umdrehung betrachtet zu früh bzw. zu spät geschaltet. Hinsichtlich der SLC-Fähigkeit bzw. der Auswertbarkeit der Stromsignale kann es dadurch bzw. zu Verzerrungen oder einem kompletten Rauschen kommen, so dass die Stromsignale nicht mehr eindeutig auswertbar sind.

### Offenbarung der Erfindung

Der Erfindung liegt daher die Aufgabe zugrunde, eine Bürstenträgereinrichtung aufzuzeigen, die die oben angeführten Toleranzprobleme vermeidet bzw. minimiert. Diese Aufgabe wird bei einer Bürstenträgereinrichtung mit den Merkmalen des Anspruchs 1 gelöst. Der Erfindung liegt dabei der Gedanke zugrunde, den Bürstenträger und somit die an ihm angeordneten Bürstenelemente (Kohlen) nicht mehr über die Toleranzkette Bürstenelement (Kohle)-Bürstenführung-Bürstenträger-Poltopf-Lagerung der Ankerwelle-Verformung der Ankerwelle unter Last zum Kommutator, sondern unmittelbar zur Welle auszurichten. Dies erfolgt dadurch, dass der Bürstenträger erfindungsgemäß auf der den Anker tragenden Welle angeordnet bzw. positioniert ist. Dadurch wird die Toleranzkette verkleinert und bei gleichen Einzelbauteiletoleranzen die Gesamttoleranz verringert. Als zusätzlicher Vorteil ergibt sich darüber hinaus, dass aufgrund der deutlich besseren Anordnung der Bürstenelemente (Kohlen) zum Kommutator die Permanentmagnete, das Eisen des Polrohrs und das Kupfer der Ankerwicklungen besser genutzt werden können.

Vorteilhafte Weiterbildungen der erfindungsgemäßen Bürstenträgereinrichtung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

In einer bevorzugten Ausführungsform lässt sich die Baugröße des Bürstenträgers minimieren und einfach fertigen, wenn der Bürstenträger einen zentralen Bereich zur Lagerung auf der (Anker-) Welle aufweist, an dem für jedes Bürstenelement ein Trägerarm einstückig angeformt ist.

Eine Anordnung, bei der die Längsachsen der Federelemente und der Bürstenelemente (Kohlen) mit der Längsachse der Welle ausgerichtet sind ermöglicht eine Verkleinerung des Bauraums des Bürstenträgers hinsichtlich seiner radialen Erstreckung.

Zur Erzielung eines über die Lebensdauer der Elektromaschine stets vorhandenen Anlagekontaktes zwischen den Bürstenelementen (Kohlen) und dem Kommutator mit geringem konstruktivem Aufwand wird in einer vorteilhaften Ausgestaltung vorgeschlagen, die Federelemente schräg in dem Bürstenträger anzuordnen.

Um die Ausrichtung des Bürstenträgers zu dem Kommutator sicherzustellen ist es vorgesehen, den Bürstenträger mit einer Verdrehsicherung auszustatten.

Besonders bevorzugt ist dabei eine Ausführungsform, bei der der elektrischen Kontaktierung der Bürstenelemente dienende Kontaktstifte gleichzeitig der Positionierung und der Verdrehsicherung dienen. Dadurch lässt sich ein zusätzlicher konstruktiver Aufwand am Bürstenträger vermeiden bzw. minimieren. Die Kontaktstifte können dabei in vorteilhafter Weise zum Beispiel mit Aussparungen an Permanentmagneten zusammenwirken.

Zur Bauraumminimierung und Reduzierung der Einzelteile ist es in einer vorteilhaften Ausgestaltung vorgesehen, dass der Bürstenträger auf einem Lager angeordnet ist, das gleichzeitig der Lagerung der Ankerwelle dient.

Eine Elektromaschine mit einer erfindungsgemäßen Bürstenlagereinrichtung hat den Vorteil geringer Leistungsverluste und einer guten Auswertbarkeit der Stromsignale im SLC-Betrieb.

Die Erfindung lässt sich bevorzugt als Elektromotor zur Verwendung als Antrieb in einem Kraftfahrzeug einsetzen, bei dem es bei vielen Funktionen auf eine hochgenaue Ansteuerung der jeweiligen Funktion bei hohem Wirkungsgrad ankommt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: einen Längsschnitt durch einen vereinfacht dargestellten Elektromotor mit einer erfindungsgemäßen Bürstenträgereinrichtung und
- Fig. 2:: eine erfindungsgemäße Bürstenträgereinrichtung in einer perspektivischen Ansicht.

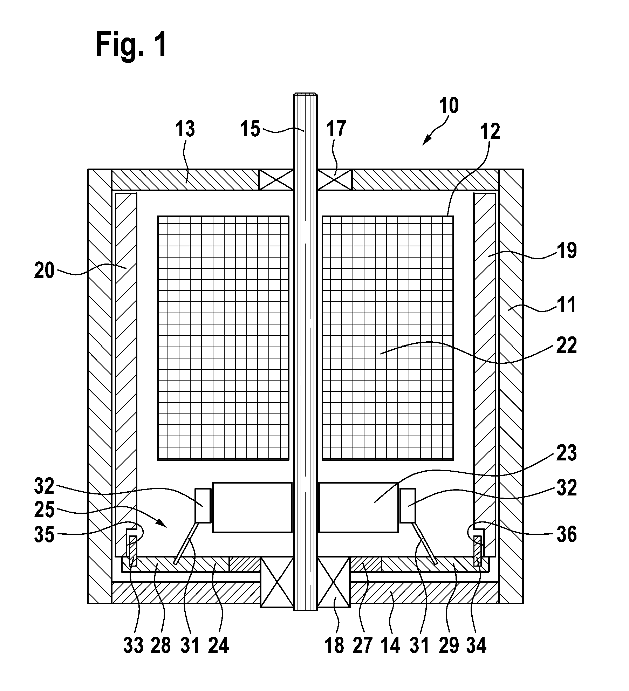

In der Fig. 1 ist eine als Elektromotor 10 ausgebildete Elektromaschine dargestellt, wie sie beispielsweise als Fensterheberantrieb in einem Kraftfahrzeug Anwendung findet. Hierbei kann gegebenenfalls ein nicht dargestelltes Untersetzungsgetriebe über sein Getriebegehäuse an den Elektromotor 10 angeflanscht sein.

Der Elektromotor 10 weist ein im Ausführungsbeispiel gleichzeitig als Gehäuse dienendes Polrohr 11 auf, das an seinen beiden Stirnseiten mittels eines vorderen Lagerdeckels 13 und eines hinteren Lagerdeckels 14 verschlossen ist. In der Längsachse des Elektromotors 10 verläuft eine Ankerwelle 15, die mittels eines vorderen Lagers 17 und eines hinteren Lagers 18 in den beiden Lagerdeckeln 13, 14 drehbar gelagert ist. Am Innenumfang des Polrohres 11 sind, da es sich im Ausführungsbeispiel um einen zweipoligen Elektromotor 10 handelt, zwei halbschalenförmige Permanentmagnete 19, 20 angeordnet und mit dem Polrohr 11 verdrehfest verbunden. Die Ankerwelle 15 des Ankers 12 trägt in üblicher Weise ein schematisch dargestelltes Lamellenpaket 22 mit Ankerwicklungen, welche mit einem Kommutator 23 elektrisch verbunden sind. Sowohl das Lamellenpaket 22 als auch der Kommutator 23 sind hierbei verdrehfest auf der Ankerwelle 15 befestigt, zum Beispiel durch Aufpressen bzw. durch eine Klebeverbindung.

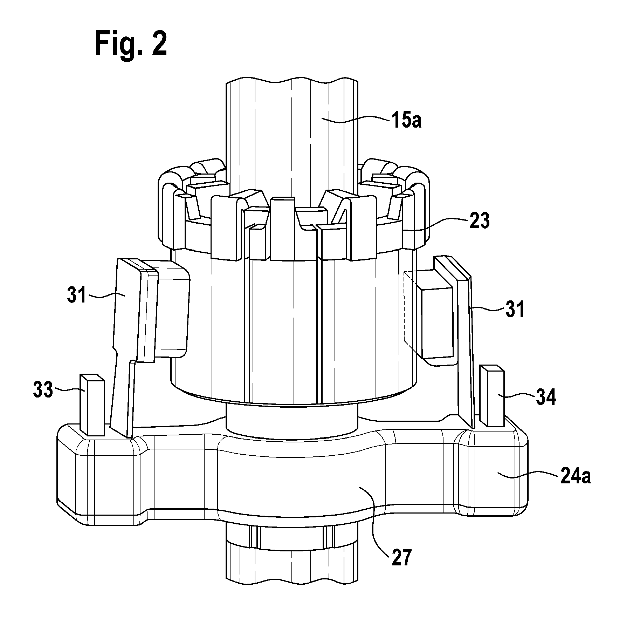

Das hintere Lager 18 ragt teilweise in den Innenraum des Polrohres 11 hinein und trägt gleichzeitig einen Bürstenträger 24, der Bestandteil einer Bürstenlagereinrichtung 25 ist. Wie am besten im Zusammenhang mit der Fig. 2 ersichtlich ist, weist der Bürstenträger 24 einen ringförmigen zentralen Bereich 27 auf, an dem entsprechend der Polzahl des Elektromotors 10 in gleichmäßigen Winkelabständen Trägerarme 28, 29 einstückig angeformt sind. An jedem Trägerarm 28, 29 ist über ein elastisch verformbares, längliches Federblechelement 31 ein als Kohle 32 ausgebildetes Bürstenelement befestigt. Um einen sicheren Anlagekontakt der blockförmigen Kohlen 32 auch dann zu gewährleisten, wenn diese über die Betriebsdauer verschleißen, ist das jeweilige Federblechelement 31 schräg in dem Trägerarm 28, 29 befestigt, so dass das Ende mit der Kohle 32 in Richtung zum Kommutator 23 ragt und in montiertem Zustand mit Vorspannung gegen den Kommutator 23 anliegt. Wesentlich ist auch, dass die Längsachsen der Federblechelemente 31 bzw. der Kohlen 32 mit der Längsachse der Ankerwelle 15 ausgerichtet sind.

Radial beabstandet zu den Federblechelementen 31 ragen aus den Trägerarmen 28, 29 Kontaktstifte 33, 34 heraus. Die Kontaktstifte 33, 34 dienen der elektrischen Kontaktierung der Federblechelemente 31 bzw. der Kohlen 32 und sind am radial äußeren Ende der Trägerarme 28, 29 auf derselben Seite wie die Federblechelemente 31 befestigt. Die mit nicht dargestellten Anschlussdrähten verbundenen Kontaktstifte 33, 34 ragen in Aussparungen 35, 36 hinein, die in den Permanentmagneten 19, 20 ausgebildet sind. Die Kontaktstifte 33, 34 dienen somit der zusätzlichen Ausrichtung des Bürstenträgers 24 bzw. der Bürstenlagereinrichtung 25 zu dem Kommutator 23.

In der Fig. 2 ist der Fall dargestellt, bei dem der Bürstenträger 24a an einem Abschnitt der Ankerwelle 15a angeordnet ist, der nicht das hintere Lager 18 trägt. In diesem Fall muss der Bürstenträger 24a ebenfalls drehbeweglich zur Ankerwelle 15a auf dieser gelagert sein. Um zu verhindern, dass beim Anlaufen des Elektromotors 10 der Bürstenträger 24a aufgrund des Schleppmomentes sich verdreht ist hier noch eine zusätzliche, nicht dargestellte Verdrehsicherung vorzusehen.

## Patentansprüche

1. Bürstenlagereinrichtung (25), mit wenigstens zwei mit einem Kommutator (23) eines Ankers (12) zusammenwirkenden Bürstenelementen (32), die jeweils an einem Federelement (31) angeordnet sind, das das Bürstenelement (32) unter Vorspannung gegen den Kommutator (23) drückt,
**dadurch gekennzeichnet,**
**dass** die Federelemente (31) an einem Bürstenträger (24; 24a) angeordnet sind, der auf einer Welle (15; 15a) gelagert ist, die auch der Lagerung des Ankers (12) dient.

2. Bürstenlagereinrichtung nach Anspruch 1,
**dadurch gekennzeichnet,**
**dass** der Bürstenträger (24; 24a) einen zentralen Bereich (27) zur Lagerung auf der Welle (15; 15a) und für jedes Bürstenelement (32) jeweils einen Trägerarm (28, 29) aufweist, die in gleichmäßigen Winkelabständen zueinander angeordnet sind.

3. Bürstenlagereinrichtung nach Anspruch 1 oder 2,
**dadurch gekennzeichnet,**
**dass** die Längsachsen der Federelemente (31) und der Bürstenelemente (32) mit der Längsachse der Welle (15; 15a) ausgerichtet sind.

4. Bürstenlagereinrichtung nach Anspruch 3,
**dadurch gekennzeichnet,**
**dass** die Federelemente (31) zum Erzielen der Vorspannung schräg in dem Bürstenträger (24; 24a) angeordnet sind.

5. Bürstenlagereinrichtung nach einem der Ansprüche 1 bis 4,
**dadurch gekennzeichnet,**
**dass** der Bürstenträger (24; 24a) mit einer Verdrehsicherung zusammenwirkt.

6. Bürstenlagereinrichtung nach einem der Ansprüche 1 bis 5,
**dadurch gekennzeichnet,**
**dass** an dem Bürstenträger (24; 24a) mit den Bürstenelementen (32) zusammenwirkende, zur elektrischen Kontaktierung der Bürstenelemente (32) dienende Kontaktstifte (33, 34) angeordnet sind.

7. Bürstenlagereinrichtung nach Anspruch 6,
**dadurch gekennzeichnet,**
**dass** die Kontaktstifte (33, 34) zur Ausrichtung des Bürstenträgers (24) auf der Welle (15) mit Bauelementen einer Elektromaschine, insbesondere mit Permanentmagneten (19, 20) zusammenwirken.

8. Bürstenlagereinrichtung nach einem der Ansprüche 1 bis 7,
**dadurch gekennzeichnet,**
**dass** der Bürstenträger (24) auf einem Lager (18) angeordnet ist, das gleichzeitig der Lagerung der Welle (15) dient.

9. Elektromaschine mit einer Bürstenlagereinrichtung (25) nach einem der Ansprüche 1 bis 8.

10. Elektromaschine nach Anspruch 9,
**dadurch gekennzeichnet,**
**dass** die Elektromaschine als Elektromotor (10) zur Verwendung als Antrieb in einem Kraftfahrzeug ausgebildet ist.
